# EUROPEAN PATENT APPLICATION

(11) **EP 4 782 189 A1**
(43) Date of publication of application: **29.07.2026**
(21) Application number: 25154490.4
(22) Date of filing: 28.01.2025
(51) Int. Cl.: B29C 70/38, B29C 70/56, B60B 5/02

(54) **APPLICATOR FOR FIBRE**

(71) Applicant: Eovidar AB, 232 35 Arlöv (SE)
(72) Inventor: Wettermark, Fredrik, 232 35 ARLÖV (SE); Flis, Micha, 232 35 ARLÖV (SE)
(74) Representative: Basck Limited

(57) **Abstract**

A fibre applicator (10) for applying a pre-impregnated composite fibre (3) to a concave surface on a mold (5).

## Description

### TECHNICAL FIELD

The present disclosure relates generally to an applicator for applying a composite fibre, and in particular an applicator for applying a fibre and in particular to applying a pre-impregnated (pre-preg) fibre, such as a towpreg fibre, for example a carbon towpreg fibre. The present disclosure also relates generally to an applicator for being mounted on a robot, and for applying a composite fibre to build a fibre composite wheel rim.

### BACKGROUND

In recent years the requirements on most notably carbon wheel rims have increased, and also for other composite products, and so has the requirements for development and manufacture of such carbon wheel rims. Not only are the physical requirements for such wheel rims very high - the wheels having to be able to handle large forces when turning, accelerating and decelerating - but the aesthetic requirements are also very high, where the design as well as the finish of the wheel rim is of very high importance.

Traditionally, carbon wheel rims are made by a skilled technician applying patches of composite material to a mold. This is not only a time-consuming process but also requires that the patches are applied very accurately, and the technician therefore needs to be highly skilled.

The prior art shows some solutions where a composite fibre is applied automatically to a mold. However, these are only usable for convex surfaces.

This problem does not only apply to the building of wheel rims, but also to other processes where a composite material is to be applied to a mold. Especially to processes where a pre-preg (pre-impregnated) composite fibre is to be applied to a mold having intrinsic details, most notably concave surfaces.

Therefore, there exists a need to find an improved manner of automating at least parts of the process of applying a composite material to a mold, such as when building a composite wheel rim.

### SUMMARY

The inventors have also realized a need to find a manner of applying a pre-preg fibre also to other products, such as having concave or other complicated surfaces, especially where existing solutions for thermoplastic fibre placement would not be possible.

The inventors have realized that by applying a "sticky" fibre, such as a pre-preg fibre by an applicator that is able to maintain a pressure on the fibre to the mold, and that is capable of turning, the fibre can be applied to molds having intrinsic details, most notably concave surfaces.

The teachings herein thus provide a fibre applicator comprising a base portion and a movable portion that is arranged to be movable relative the base portion, wherein the base portion comprises a first guiding wheel and wherein the movable portion comprises a second guiding wheel and an applicator wheel, wherein the first guiding wheel is arranged to guide a fibre to the second guiding wheel, the second guiding wheel is arranged to guide the fibre to the applicator wheel, and the applicator wheel is arranged to apply the fibre to a mold, and wherein the first guiding wheel and the second guiding wheel are arranged to keep tension in the fibre as the movable portion moves relative the base portion, wherein the fibre is a pre-impregnated composite fibre and wherein the fibre applicator further comprises a biasing device arranged to provide a biasing force to the movable portion to enable the applicator wheel to apply the fibre at a maintained pressure.

In some embodiments the applicator is as in any of the appended claims.

In some embodiments the fibre is a towpreg fibre. In some embodiments the fibre comprises carbon fibre.

According to some aspects there is provided an applicator that is configured to be mounted on a robot, wherein the robot comprises a modular connection and the applicator comprises a mating modular connection. It should be noted that even if the description is focused on robots, the applicator can also be mounted on a cobot. A cobot, or collaborative robot, is a robot intended for direct human-robot interaction within a shared space, or where humans and robots are in close proximity. Cobot applications contrast with traditional industrial robot applications in which robots are isolated from human contact or the humans are protected by robotic tech vests. Cobots and robots may be regarded as being the same, a cobot being a specific type of robots (collaborative robot).

In some embodiments, the robot need not be a robot as in a self-controlled and automated machine, but can be any type of automated (for example mechanically automated) machine performing a movement pattern.

In some embodiments and aspects, the applicator can also be mounted to other machinery including fixtures.

According to some aspects there is provided a use of a fibre applicator according to the teachings herein for applying a pre-impregnated composite fibre to a concave surface on a mold.

According to some aspects there is provided a fibre applying robot (or cobot) comprising or being arranged to receive an applicator according to the teachings herein.

According to some aspects there is provided a wheel rim built utilizing a fibre applicator according to the teachings herein.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and details disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
Figure 1 is a schematic illustration of a robot carrying an applicator in accordance with an embodiment of the present disclosure;
Figure 2 is a schematic illustration of an applicator in accordance with an embodiment of the present disclosure;
Figure 3 is a schematic illustration of an applicator in accordance with an embodiment of the present disclosure;
Figure 4 is a schematic illustration of an applicator in accordance with an embodiment of the present disclosure; and
Figure 5 is a schematic illustration of an applicator in accordance with an embodiment of the present disclosure.

### DETAILED DESCRIPTION OF THE DRAWINGS

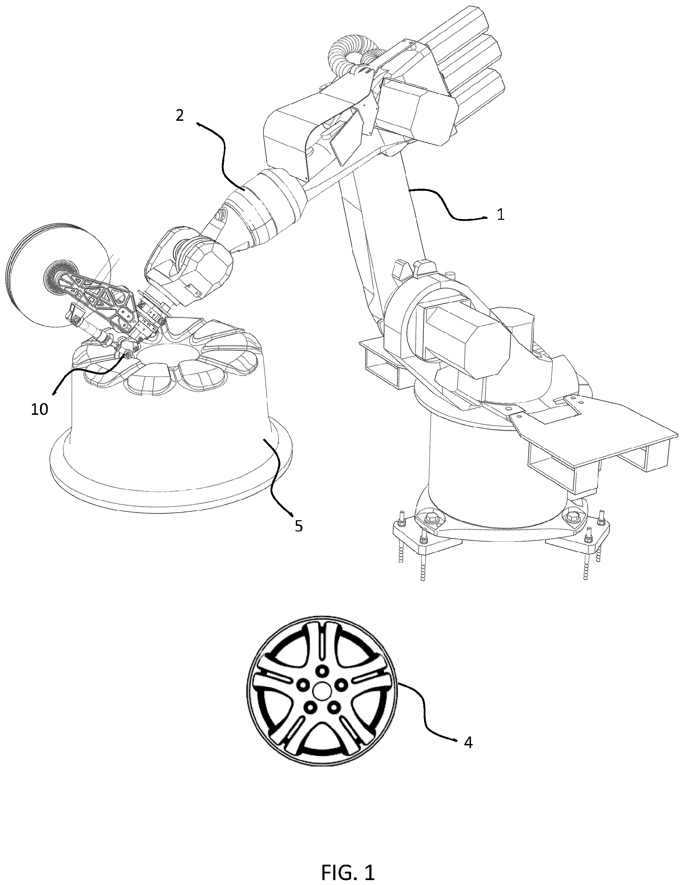

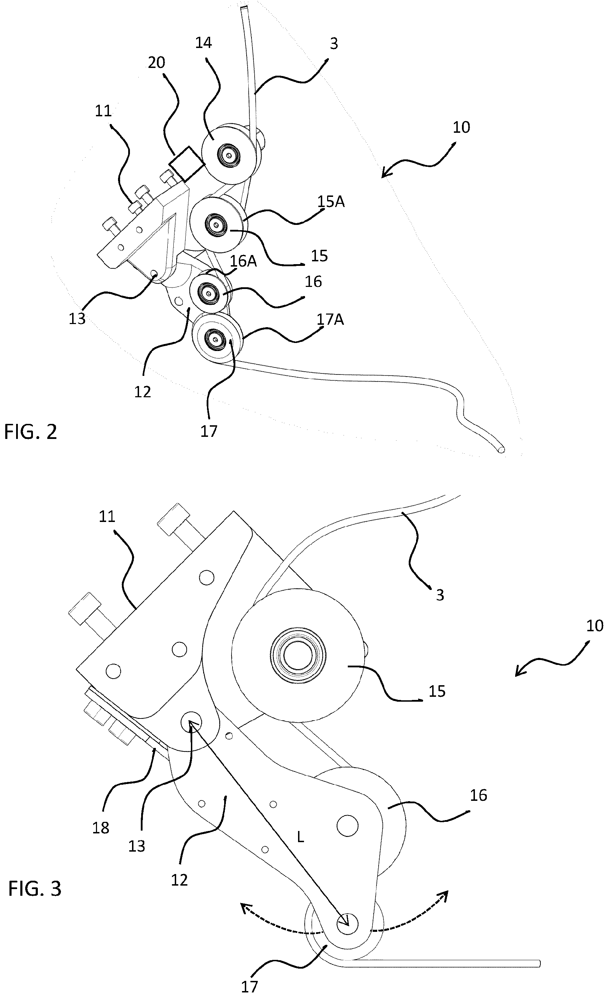

Referring to Figure 1, there is illustrated therein a side-view of a robot (or in some embodiments a cobot) 1 carrying an applicator 10 arranged on one or more movable arms of the robot 1. The robot is in some embodiments an industrial robot. In some embodiments the robot 1 carrying the applicator 10 is arranged to apply a composite fibre (as will be shown in figure 2 referenced 3 and discussed in the below) to build for example a wheel 4, by applying the fibre (referenced 3 in figure 2) to a mold 5, especially to a concave portion of the mold 5. The robot 1 is thus a fibre applying robot 1 comprising or being arranged to receive an applicator 10 as will be discussed herein.

It should be noted that a although the description herein will focus on building a composite fibre wheel rim, it should be understood that the teachings herein may also be applied to other technical areas and to build other products. Especially, the teachings herein find particular use and benefit when being used to build products having an intricate design, such as having concave surfaces where the fibre is to be applied. Examples of such other products are machine parts, feeding wheels, industrial components. Other examples are products having structural loadbearing components, and especially such that are not (rotationally) symmetrical.

As can be seen in figure 1, and as is known, high-performance carbon rims have a very detailed design with lots of intrinsic details.

It should also be noted that the applicator may be mounted and used in other ways than being mounted on a robot, such as by being mounted on other machinery or even on a fixture (or other fixed structure).

Referring to Figure 2, there is illustrated therein a side-view of an applicator 10 as in Figure 1. The applicator 10 comprises a base portion 11 and a movable portion 12, that is movable connected to the base portion 11 through a joint or hinge 13, which enables the movable portion 12 to rotate with regards to the base portion 11.

The base portion 11 carries, such as comprises or having connected thereto, a tow receiving arrangement 14 which is arranged to receive a tow or bundle of fibres 3 and to guide it to a first guiding wheel 15 which is also carried on the base portion 11. As noted herein, the fibres are supplied in bundles or tows of fibres and any reference to a fibre would be understood by a skilled person to be a reference to a bundle or tow of fibres.

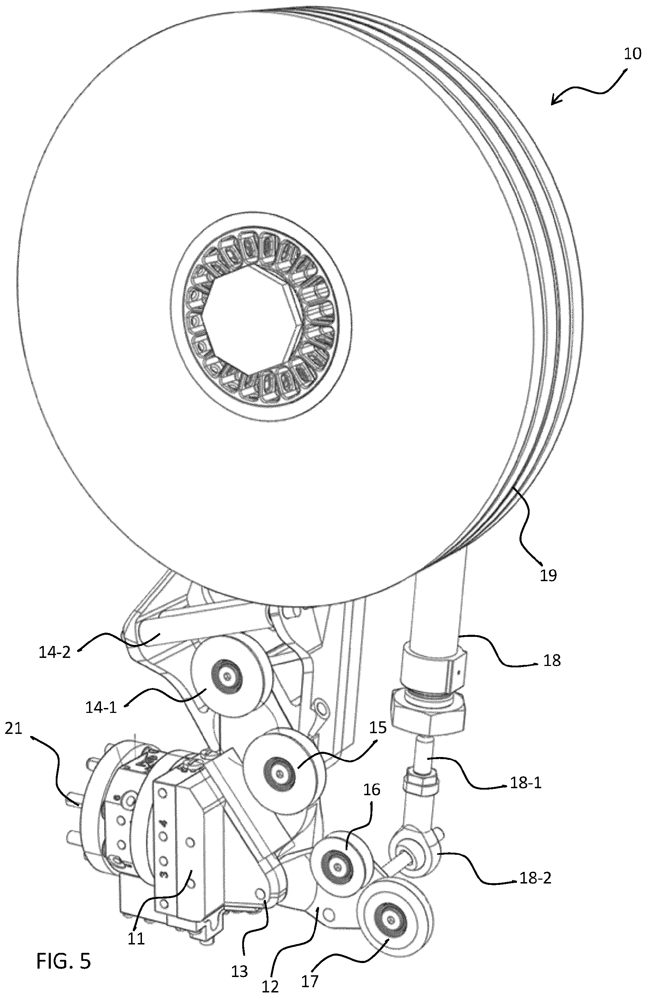

In some embodiments the tow receiving arrangement 14 comprises a receiving wheel 14. In some embodiments the tow receiving arrangement 14 comprises receiving rollers (referenced 14-2 in figure 5). In some embodiments the receiving rollers (referenced 14-2 in figure 5) includes two rollers that are arranged parallel to one another and at a distance of 1x, 1.5x or 2x the width of the fibre bundle 3 to be received from one another. The rollers enable for the fibre to be received at different angles (for example from a cartridge - referenced 19 in figure 5).

The first guiding wheel 15 is arranged to keep the tension of the fibre 3 as the movable portion 12 moves.

The movable portion 12 carries, such as comprises or having connected thereto, a second guiding wheel 16, which is also arranged to keep the tension of the fibre 3 as the movable portion 12 moves. The movable portion 12 also carries, an applicator wheel 17.

The first guiding wheel 15 is also arranged to guide the fibre 3 onto the second guiding wheel 16.

The second guiding wheel 16 is also arranged to guide the fibre 3 onto the applicator wheel 17.

As is illustrated in figure 2, the fibre is thread on alternative sides of the wheels in order to generate tension so that the fibre 3 follows the wheels 15, 16 and 17.

The wheels 15, 16 and 17 are arranged with grooves 15A, 16A and 17A respectively for receiving the fibre 3 and to steer or control the fibre bundle/tow 3 as it is being applied to a mold 5.

Referring to Figure 3, there is illustrated therein a side-view of an applicator 10 as in Figure 2. Figure 3 illustrates how the movable portion 12 can move or rotate relative the base portion 11 - as is indicated by the dotted arrows. This allows for the applicator wheel 17 to move up and down relative the surface that the fibre 3 is being applied to, which in turn allows the applicator wheel 17 to follow a detailed design very accurately. As the fibre 3 is thread around the first and second guiding wheels 15 and 16, the tension in the fibre 3 is maintained as the applicator wheel 17 (or rather the movable portion 12) moves.

Figure 3 also shows that the base portion 11 carries a biasing device 18, that is configured to apply a biasing force to the movable portion 12. This enables the applicator wheel 17 to follow the surface more precisely as pressure is being maintained against the surface by the biasing device 18. The biasing device 18 is thus arranged for providing a biasing force to the movable portion 12 to enable the applicator wheel 17 to apply the fibre 3 at a maintained pressure, wherein the pressure is maintained within +/-5%, +/-10%, +/- 15% or +/-20% of a given (or average) pressure.

In some embodiments the biasing device 18 comprises a spring 18.

In some embodiments the spring 18 comprises a mechanical spring, such as a leaf spring.

In some embodiments the spring 18 comprises a pneumatic spring, as will be discussed in more detail with reference to figure 5.

In some embodiments the spring 18 comprises a mechanical spring and a pneumatic spring, such as a combination spring.

As a skilled person would understand, the dimensions of the receiving device 14, the first guiding wheel 15, the second guiding wheel 16 and the applicator wheel 17 depends on the dimensions of the fibre 3 to be applied. As a skilled person would also understand the dimensions depend on the design to be built (i.e. the mold 5 to be followed) in some embodiments.

Returning to figure 2, each wheel includes a groove for receiving and guiding the fibre. The dimensions of a wheel thus include a diameter and a width and depth of a groove.

In some embodiments the first guiding wheel 15 is of a first diameter. In some such embodiments the first diameter is 20, 25, 30, 35 or 40 mm (or in any range thereinbetween).

In some embodiments the second guiding wheel 16 is of a second diameter. In some such embodiments the second diameter is 20, 25, 30, 35 or 40 mm (or in any range thereinbetween).

In some embodiments the first guiding wheel 15 and the second guiding wheel 16 are of a (same) first diameter.

In some embodiments the applicator wheel 17 is of a third diameter. In some such embodiments the first diameter is 15, 20, 25, or 30 mm (or in any range thereinbetween).

In some embodiments the second guiding wheel 16 and the applicator wheel 17 are of a (same) second diameter.

In some embodiments the diameter of the first guiding wheel 15 depends on the distance between the joint 13 and the (rotational axis of) the applicator wheel 17. In some embodiments the diameter of the second guiding wheel 16 depends on the distance between the joint 13 and the (rotational axis of) the applicator wheel 17. In some such embodiments the diameter(s) (first and/or second) is less than 25'%, 30%, 33% or 50% of the distance between the joint 13 and the applicator wheel 17.

However, in some embodiments, in order to enable for steeper turning, while maintaining tension to the fibre, the third diameter is smaller than the second (and possibly the first) diameter.

The dimensions (width and depth) of the grooves (14A), 15A, 16A, 17A depend on the size of the fibre 3.

The width of a groove is designed so as that the fibre 3 is easily received but is kept under control in the wheel. In some embodiments the width of the grooves (14A), 15A, 16A for the receiving and guiding wheels 14, 15, and 16 are wide enough to receive the fibre 3 (width of fibre + 0-5%, 0-10% or 5-10% - or in any range therein between).

Similarly, the depth of a groove is designed so as that the fibre 3 is easily received but is kept under control in the wheel. As the fibre 3 is to be prevented from skipping or jumping out of the wheel, the groove is beneficially selected to be deeper than a depth of the fibre 3. In some embodiments the depth of the grooves (14A), 15A, 16A for the receiving and guiding wheels 14, 15, and 16 are in the range depth/height of fibre + 5%, 10% 15%, or 5-20% - or in any range therein between.

As regards the applicator wheel 17, the dimensions of the groove 17A is selected differently. The groove 17A has to be wide and deep enough to maintain control of the fibre 3 (prevent it from falling out of the groove 17A - even in steep turns), while be narrow and shallow enough to allow the fibre 3 to come into sufficient touch or contact with the mold 5 so that the fibre 3 can attach to the mold 5.

In some embodiments the depth of the groove 17A is less than depth/height of the fibre, and in some embodiments in the range: depth/height of fibre - (minus) 5%, 10% 15%, 20%, 25%, 10-25% or 5-20% - or in any range therein between.

In some embodiments the width of the groove 17A is less than a width of the fibre, and in some embodiments in the range: width of fibre - (minus) 5%, 10% 15%, 20%, 25%, 10-25% or 5-20% - or in any range therein between.

The first guiding wheel 15 and the second guiding wheel 16 are arranged at a distance to one another, which distance depends on the diameter of the first guiding wheel 15 and the diameter of the second guiding wheel 16. In some embodiments the distance between the (rotational axis of the) first guiding wheel 15 and the (rotational axis of the) second guiding wheel 16 depends on the distance between the joint 13 and the (rotational axis of) the applicator wheel 17, and in some such embodiments the distance between the (rotational axis of the) first guiding wheel 15 and the (rotational axis of the) second guiding wheel 16 is more than 40%, 50%, 60%, 66% or 75% of the distance between the joint 13 and the (rotational axis of) the applicator wheel 17.

The length of the movable portion 12, as possibly expressed as the distance between the joint 13 and the (rotational axis of) the applicator wheel 17, depends on the expected movement and the diameters of the wheels. The distance between the joint 13 and the (rotational axis of) the applicator wheel 17 also depends on the biasing device 18 being used. Similarly, the biasing device 18 being used may depend on the distance between the joint 13 and the (rotational axis of) the applicator wheel 17.

The distance between the joint 13 and the (rotational axis of) the applicator wheel 17 is selected to allow for small angular movements (for example less than 2 degrees, less than 5 degrees, or less than 10 degrees). This allows for the biasing device 18 to provide a linear biasing force as a longer distance L provides for a smaller angular distance and thereby it will be easier to design the applicator so that the biasing device 18 operates in a linear area. As is known, the force enacted by a mechanical spring is given by Hooke's law. However, Hooke's law is only a first-order linear approximation to the real response of springs and other elastic bodies to applied forces and assumes that the expansion of the spring is small compared to the total possible deformation of the spring. This is especially noticeable for springs such as leaf springs, which are easy to mount, but only allow for a (relatively) small deformation.

In some embodiments the distance L (distance between the joint 13 and the (rotational axis of) the applicator wheel 17) is between 40 and 80 mm, in some embodiments the distance L is between 50 and 70 mm, in some embodiments the distance L is between 55 and 65 mm, and in some embodiments the distance L is between 60 and 65 mm.

As a skilled person would understand the dimensions of the biasing device will depend on the dimensions of both the applicator's components and the fibre as well as the product to be built.

It should be noted that even though the examples discussed herein so far show an applicator arranged to receive and apply a single fibre tow 3, the applicator may be configured to receive and apply more than one fibre tow 3.

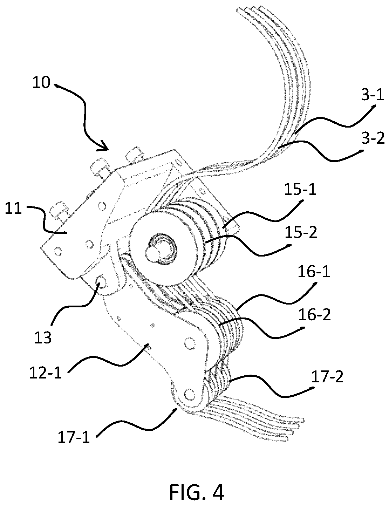

Figures 4 shows a view of a multi-tow applicator 10 where a single base portion 11 carries more than one tow receiving device (not shown specifically in figure 4 but seen as being copies of the receiving device 4 of figure 2) and more than one first guiding wheel 15-1, 15-2. The multi-tow applicator 10 also comprises more than one second guiding wheels 16-1, 16-2, being arranged on each a movable portion 12-1, 12-2, which are all arranged movably (individually) with regards to the base portion 11 through the joint 13. The movable portions 12-1, 12-2 also carries each an applicator wheel 17-1, 17-2. In some embodiments the biasing device 18 also comprises one biasing device for each movable portion 12-1, 12-2. The fibre applicator 10 is thus configured to apply more than one tow of fibres 3-1, 3-2 simultaneously.

In some embodiment the fibre 3 used with a single-tow applicator (arranged to receive a single tow of fibres 3), is of a different type(/dimension) as the multiple tows of fibres 3 used with a multi-tow applicator. The Single-tow applicator is in some embodiments used to build the finer details of the wheel 4 (or other products), whereas the multi-tow applicator is used to build flatter and/or wider surfaces/areas of the wheel 4. Examples of such areas for use with the single-tow applicator is where the spokes are joined to the tire receiving portion, and Examples of such areas for use with the multi-tow applicator is the tire receiving portion.

It should be noted that even if reference is made to (individual) fibres herein, a skilled person would understand this to mean a bundle or tow of fibres. The fibre (or bundle of fibres) 3 is, in some embodiments, made of composite material(s), such as carbon. The fibre 3 is, in some embodiments, a pre-preg (pre-impregnated) fibre, such as pre-preg glass fibre, pre-preg aramid, or towpreg carbon. As is known a towpreg comprises a high count of filaments that are pre-impregnated with an optimal quantity of resin. The towpreg usually consist of a bundle of fibres or filaments, but can also be formed in other ways such as parallel fibres (that are bundled) and twisted fibres. In some embodiments several towpreg fibres are bundled together to form a (wider) bundle.

In some embodiments, the fibre 3 is heated by a heater 20. The heater 20 is in some embodiments an InfraRed heater. The heater 20 is in some embodiments a laser heater. It should be noted that the heater 20 may also be of other types of heaters than those specifically disclosed herein. The heater 20 is only shown in figure 2, but it should be understood that it can be incorporated into any of the other figures as well.

In some embodiments, the heater is provided through the external and surrounding temperature (such as the temperature of the room). In some embodiments, the fibre 3 is selected to be a prepreg fibre that is "sticky" (exhibiting adhesive properties) also at room temperature (for example 18-25 degrees (Celsius)) as this does not require any specific heating of the room and/or of the fibre. In some embodiments, the fibre is selected to be "sticky" at the operating temperature of the room where the applicator is utilized - whatever that would be.

In some embodiments the heater is arranged to heat the fibre 3 directly. In some embodiments the heater is arranged to heat the fibre 3 indirectly, for example by heating one (or more) of the guiding and/or receiving wheels.

Figure 5 shows a specific embodiment of an applicator 10 as per the disclosure herein. The applicator 10 comprises or is configured to be connected to a fibre cartridge 19. The applicator 10 comprises a biasing device 18 in the shape of a pneumatic spring 18, where a shaft 18 is pneumatically biased and connected to the movable portion 12 through a joint 18-2.

The inventors have realized that by utilizing a pneumatic spring, the problems associated with designing the applicator so that the biasing device 18 is enabled to operate in a linear fashion are rendered void, as the pneumatic spring is linear all through (or at least through a wider range of displacement) than a mechanical spring. The applicator can thus be made smaller, which in turn allows for even more delicate designs to be built.

The applicator 10 also comprises a mating connector 21 for connecting and mounting the applicator 10 to a mounting connector of a robot 1. The robot will control movement of the applicator 10 and steering the applicator 10 over the mold 5 to build the wheel 4.

The applicator 10 is a passive device, which only relies on the movements of the robot 1 (or other steering device) to apply the fibre. However, through its brilliant construction, the applicator 10 is enabled to provide control of the fibre tow as it is being applied allowing for steep turns and movements, thereby allowing for building products, such as wheels, of intrinsic detailed designs.

It should also be noted that in some embodiments, the applicator 10 is fixedly mounted, and the mold 5 for the product 4 being manufactured (such as the wheel rim) is being moved relative the applicator 10. In some embodiments, the applicator 10 is mounted on a first robot and the mold for the product being manufactured (such as the wheel rim) is being moved (simultaneously) relative the applicator 10 by a second robot. The applicator 10 is thus reliant on the relative motion between the applicator 10 and the mold or product - however this motion is achieved.

As mentioned above, the teachings herein can also be applied to other products, such as products having intrinsic details, for example concave surfaces that the fibre is to be applied to.

By providing the applicator with a mating (robot) connector, the robot 1 can (automatically) be equipped with different applicators for different potions of the wheel, for example switching between a single tow applicator and a multi-tow applicator, and/or between different multi-tow applicators (different number of fibre bundles and/or different types of fibres). This allows for many different designs to be built in an automated fashion.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A fibre applicator (10) comprising a base portion (11) and a movable portion (12) that is arranged to be movable relative the base portion (11), wherein the base portion (11) comprises a first guiding wheel (15) and wherein the movable portion (12) comprises a second guiding wheel (16) and an applicator wheel (17), wherein
the first guiding wheel (15) is arranged to guide a fibre (3) to the second guiding wheel (16),
the second guiding wheel (16) is arranged to guide the fibre (3) to the applicator wheel (17), and
the applicator wheel (17) is arranged to apply the fibre (3) to a mold (5), and wherein
the first guiding wheel (15) and the second guiding wheel (16) are arranged to keep tension in the fibre (3) as the movable portion (12) moves relative the base portion (11),
wherein the fibre (3) is a pre-impregnated composite fibre, such as a towpreg carbon fibre, and
wherein the fibre applicator (10) further comprises a biasing device (18) arranged to provide a biasing force to the movable portion (11) to enable the applicator wheel (17) to apply the fibre (3) at a maintained pressure to a surface on a mold (5), such as to a concave surface on the mold (5).

2. A fibre applicator (10) according to claim 1, wherein the base portion (11) further comprises a tow receiving device (14) for receiving the fibre (3) and guiding the fibre to the first guiding wheel (15).

3. A fibre applicator (10) according to claim 2, wherein the tow receiving device (14) comprises a receiving wheel (14), and, optionally, a pair of rollers (14-1) arranged to receive and guide the fibre (3) to the receiving wheel (14).

4. A fibre applicator (10) according to any preceding claim, wherein biasing device (18) is also configured to keep tension of the fibre (3).

5. A fibre applicator (10) according to any preceding claim, wherein the biasing device (18) comprises a mechanical spring and/or a pneumatic spring.

6. A fibre applicator (10) according to any preceding claim, wherein the first guiding wheel (15) and the second guiding wheel (16) are of a (same) first diameter, and/or wherein the second guiding wheel (16) and the applicator wheel (17) are of a (same) second diameter or wherein the third diameter of the applicator wheel (17) is smaller than the second diameter of the second guiding wheel (16).

7. A fibre applicator (10) according to any preceding claim, wherein the movable portion (12) is movable around a joint (13), and wherein the first and/or the second diameter is less than 25'%, 30%, 33% or 50% of the distance between the joint (13) and the applicator wheel (17).

8. A fibre applicator (10) according to any preceding claim, wherein the first and the second guiding wheels (15, 16) each have a groove (15A, 16A) with a depth, and wherein the depth of the first guiding wheel (15) and/or of the second guiding wheel (16) is deeper than a depth of the fibre (3).

9. A fibre applicator (10) according to any preceding claim, wherein the applicator wheel (17) has a groove (17A) with a depth that is less than a depth of the fibre (3) and with a width less than a width of the fibre (3).

10. A fibre applicator (10) according to any preceding claim, wherein the length of the movable portion (12) is selected to allow for small angular movements, less than 5 degrees.

11. A fibre applicator (10) according to any preceding claim, wherein the fibre applicator (10) further comprises more than one movable portion (12), whereby the fibre applicator (10) is configured to apply more than one fibre (3) simultaneously.

12. A fibre applicator (10) according to any preceding claim, wherein the fibre applicator (10) further comprises or is configured to be connected to a fibre cartridge (19).

13. A fibre applying robot (1) comprising or being arranged to receive an applicator (10) according to any previous claim.

14. A wheel rim (4) built utilizing a fibre applicator according to any of claims 1 to 12.

15. Use of a fibre applicator (10) according to any of claims 1 to 12 for applying a pre-impregnated composite fibre (3) to a concave surface on a mold (5).

## Amended claims

### Amended claims in accordance with Rule 137(2) EPC.

1. A fibre applicator (10) comprising a base portion (11) and a movable portion (12) that is arranged to be movable relative the base portion (11), wherein the base portion (11) comprises a first guiding wheel (15) and wherein the movable portion (12) comprises a second guiding wheel (16) and an applicator wheel (17), wherein
the first guiding wheel (15) is arranged to guide a fibre (3) to the second guiding wheel (16),
the second guiding wheel (16) is arranged to guide the fibre (3) to the applicator wheel (17), and
the applicator wheel (17) is arranged to apply the fibre (3) to a mold (5), and wherein
the first guiding wheel (15) and the second guiding wheel (16) are arranged to keep tension in the fibre (3) as the movable portion (12) moves relative the base portion (11),
wherein the fibre (3) is a pre-impregnated composite fibre, such as a towpreg carbon fibre, and
wherein the fibre applicator (10) further comprises a biasing device (18) arranged to provide a biasing force to the movable portion (12) to enable the applicator wheel (17) to apply the fibre (3) at a maintained pressure to a surface on a mold (5), such as to a concave surface on the mold (5).

2. A fibre applicator (10) according to claim 1, wherein the base portion (11) further comprises a tow receiving device (14) for receiving the fibre (3) and guiding the fibre to the first guiding wheel (15).

3. A fibre applicator (10) according to claim 2, wherein the tow receiving device (14) comprises a receiving wheel (14), and, optionally, a pair of rollers (14-1) arranged to receive and guide the fibre (3) to the receiving wheel (14).

4. A fibre applicator (10) according to any preceding claim, wherein biasing device (18) is also configured to keep tension of the fibre (3).

5. A fibre applicator (10) according to any preceding claim, wherein the biasing device (18) comprises a mechanical spring and/or a pneumatic spring.

6. A fibre applicator (10) according to any preceding claim, wherein the first guiding wheel (15) and the second guiding wheel (16) are of a (same) first diameter, and/or wherein the second guiding wheel (16) and the applicator wheel (17) are of a (same) second diameter or wherein the third diameter of the applicator wheel (17) is smaller than the second diameter of the second guiding wheel (16).

7. A fibre applicator (10) according to any preceding claim, wherein the movable portion (12) is movable around a joint (13), and wherein the first and/or the second diameter is less than 25'%, 30%, 33% or 50% of the distance between the joint (13) and the applicator wheel (17).

8. A fibre applicator (10) according to any preceding claim, wherein the first and the second guiding wheels (15, 16) each have a groove (15A, 16A) with a depth, and wherein the depth of the first guiding wheel (15) and/or of the second guiding wheel (16) is deeper than a depth of the fibre (3).

9. A fibre applicator (10) according to any preceding claim, wherein the applicator wheel (17) has a groove (17A) with a depth that is less than a depth of the fibre (3) and with a width less than a width of the fibre (3).

10. A fibre applicator (10) according to any preceding claim, wherein the length of the movable portion (12) is selected to allow for small angular movements, less than 5 degrees.

11. A fibre applicator (10) according to any preceding claim, wherein the fibre applicator (10) further comprises more than one movable portion (12), whereby the fibre applicator (10) is configured to apply more than one fibre (3) simultaneously.

12. A fibre applicator (10) according to any preceding claim, wherein the fibre applicator (10) further comprises or is configured to be connected to a fibre cartridge (19).

13. A fibre applying robot (1) comprising or being arranged to receive an applicator (10) according to any previous claim.

14. Use of a fibre applicator (10) according to any of claims 1 to 12 for applying a pre-impregnated composite fibre (3) to a concave surface on a mold (5).
